# DEMANDE DE BREVET EUROPEEN

(11) **EP 4 074 169 A1**
(43) Date de publication de la demande: **19.10.2022**
(21) Numéro de dépôt: 22167718.0
(22) Date de dépôt: 11.04.2022
(51) Int. Cl.: A01G 13/02, A01G 9/14

(54) **DISPOSITIF DE PROTECTION DE CULTURES EN RANGS**

(30) Priorité: 12.04.2021 FR 2103746
(71) Demandeur: Jeannel Dabry de Thiersant, Guilhem, François, 92400 Courbevoie (FR)
(72) Inventeur: Jeannel Dabry de Thiersant, Guilhem, François, 92400 Courbevoie (FR)
(74) Mandataire: Fidal Innovation

(57) **Abrégé**

Le dispositif de protection (1) d'une rangée de végétaux (16) rectiligne selon un axe comprend une pluralité de poteaux (14) alignés suivant l'axe de la rangée de végétaux (16), un élément de couverture (13) et un dispositif (12) d'enroulement et de déroulement de cet élément de couverture (13). Lorsqu'il est au moins partiellement ou déroulé, l'élément de couverture (13) forme de part et d'autre de ladite rangée rectiligne de végétaux (16) deux surfaces substantiellement planes. Le dispositif de protection (1) comprend un dispositif de contrôle de l'angle formé par chacune de ces surfaces planes avec un plan vertical contenant l'axe de la rangée de végétaux (16).

## Description

### DOMAINE DE L'INVENTION

La présente invention se rapporte à un dispositif de protection de cultures.

Plus précisément, l'invention se rapporte à un dispositif de protection de végétaux disposés suivant une rangée rectiligne contre les éléments naturels, tels que notamment la pluie, la grêle, le gel ou le vent.

### ARRIÈRE-PLAN TECHNOLOGIQUE

Dans le domaine de l'agriculture, et plus particulièrement de la viticulture, les aléas climatiques sont sources de variations importantes des rendements d'une année sur l'autre. Les végétaux sont, suivant les saisons, exposés au gel, à la pluie, à la grêle. Il n'est par exemple pas rare de perdre la récolte de plusieurs hectares de vignes du fait d'une violente averse de grêle, particulièrement en fin d'été.

Il est donc particulièrement important dans le domaine de la viticulture - mais aussi plus généralement de l'agriculture - de disposer de moyens de limiter les conséquences de la pluie, de la grêle ou du gel sur le développement de la végétation.

Les vignes sont aussi sujettes à différentes maladies cryptogamiques et autres maladies qui se développent à la faveur de l'humidité.

Dans le cas de l'anthracnose, le champignon hiverne notamment dans les chancres formés sur les sarments et dans les baies infectées tombées au sol ou restées sur le cep ou les fils de fer. Au printemps, de petites fructifications se forment et produisent des spores qui sont disséminées par la pluie. Plus les feuilles et rameaux restent mouillés longtemps (au moins 12 heures typiquement), plus l'épidémie risque d'être sévère.

Dans le cas du mildiou, les pluies jouent aussi un rôle déterminant dans le cycle des contaminations secondaires : les spores issues des contaminations primaires peuvent se détacher avec le vent ou la pluie pour aller contaminer d'autres organes de la vigne, si ces derniers restent humides au moins 2 heures. Ces cycles secondaires peuvent se succéder plusieurs fois au cours du cycle végétatif de la vigne. Le nombre de contaminations secondaires dépend des conditions climatiques, notamment de l'humidité (éventuellement sous forme de brouillard) et de la pluie.

Dans le domaine de la viticulture, il est connu d'utiliser des produits phytosanitaires pour limiter le développement de ces maladies cryptogamiques. Ces produits phytosanitaires posent des problèmes de santé publique pour les populations vivant à proximité des vignes et pour les viticulteurs, et peuvent entraîner une pollution des sols ou des cours d'eau ainsi que déséquilibrer les écosystèmes.

Il est donc souhaitable de limiter autant que possible leur usage, ce qui peut se faire au moyen de dispositifs de protection physiques.

Le document EP1203526A1 est un exemple de dispositif de protection physique contre les éléments naturels tels que la grêle, le gel, le vent violent, notamment pour des végétaux disposés en rangs. Ce dispositif comprend un élément de couverture, tel qu'une bâche. L'élément de couverture est initialement roulé sur lui-même autour de deux éléments d'enroulement et de déroulement distincts, et disposé dans une position d'attente de part et d'autre du sommet de la ligne de végétaux. L'élément de couverture, de préférence souple, peut être déroulé pour protéger les végétaux.

Lorsque l'élément de couverture est déroulé, il se dispose naturellement de part et d'autre des végétaux sous l'effet de la pesanteur. Il n'est donc pas possible de choisir l'écartement entre l'élément de couverture et la végétation, en fonction des événements météorologiques pouvant survenir à telle ou telle saison.

Par ailleurs, la position d'attente au sommet de la ligne des végétaux empêche une taille mécanisée de ces végétaux au niveau de leur partie supérieure, c'est-à-dire une opération de rognage, à moins de démonter le dispositif pour effectuer le rognage.

Cela est d'autant plus gênant que le rognage :
- favorise la fructification et l'alimentation des baies,
- favorise la bonne maturation des raisins en améliorant l'ensoleillement et l'aération des grappes,
- limite le développement de maladies telles que les maladies cryptogamiques en évitant l'entassement de végétation, et en limitant l'ombre et l'humidité stagnante.

Le document EP3248455A1 est un autre exemple de dispositif de protection des cultures contre les éléments naturels tels que la neige ou la pluie.

Le dispositif décrit par ce document comprend deux bras, formant globalement un cadre rectangulaire, montés en liaison pivot par rapport à un axe horizontal et pouvant former l'un par rapport à l'autre un angle variant d'un angle nul en position haute, à un angle obtus en position ouverte.

Un filet de protection peut prendre appui sur ce cadre, pour former une surface de protection substantiellement horizontale sur la partie haute et, optionnellement, une surface substantiellement verticale de part et d'autre du cadre.

Ce dispositif permet, en choisissant l'angle formé entre les deux bras, de définir une surface horizontale d'ombrage ou de protection contre la pluie plus ou moins grande. Par contre, le filet de protection ne peut être déroulé jusqu'au sol que lorsque les bras sont ouverts et positionnés plus bas que l'axe d'enroulement du filet de protection. Le filet de protection se dispose alors verticalement de part et d'autre des bras sous l'effet de la pesanteur. Il n'est donc possible de choisir l'écartement entre les deux pans verticaux du filet (lorsque ce dernier est suffisamment déroulé pour former de tels pans verticaux) et la végétation que dans une mesure restreinte. Ce dispositif ne peut donc pas s'adapter avec précision à des conditions climatiques aussi différentes que la grêle, la pluie ou le gel.

Par ailleurs, ce dispositif ne permet pas non plus le passage d'un outil de taille mécanisé, tel qu'une rogneuse sur la partie haute de la végétation, à moins d'être démonté avant et réinstallé après chacune des opérations de rognage.

L'invention vise ainsi à proposer un dispositif de protection de végétaux disposés suivant des rangées contre les éléments naturels, dont la configuration géométrique peut être adaptée spécifiquement à l'élément naturel, notamment la grêle, la pluie et le gel et qui ne nécessite pas de démontage partiel ou total lorsque des opérations de taille des végétaux doivent être effectuées.

### RÉSUMÉ DE L'INVENTION

Ainsi, l'invention se rapporte à un dispositif de protection, notamment contre les éléments naturels, d'une rangée de végétaux rectiligne selon un axe. Le dispositif de protection comprend une pluralité de poteaux alignés suivant l'axe de la rangée de végétaux, un élément de couverture et un dispositif d'enroulement et de déroulement de l'élément de couverture. L'élément de couverture, lorsqu'il est au moins partiellement déroulé, forme de part et d'autre de la rangée rectiligne de végétaux deux surfaces substantiellement planes,

Le dispositif de protection comprend un dispositif de contrôle de l'angle dièdre formé par chacune des surfaces planes avec un plan vertical contenant l'axe de la rangée de végétaux.

Grâce à ces dispositions, il est possible de positionner les surfaces planes de l'élément de couverture, de manière à ce qu'elles forment des angles variés avec la verticale. De cette façon, la position de l'élément de couverture peut être adaptée à l'élément naturel dont il faut protéger la rangée de végétaux : surfaces presque verticales, proches des végétaux en cas de gel ; surfaces inclinées par rapport la verticale pour permettre un ruissellement de l'eau dans l'intervalle entre deux rangées en cas de pluie ; en cas de grêle, surfaces moins inclinées qu'en cas de pluie par rapport la verticale pour permettre un ruissellement de l'eau dans l'intervalle entre deux rangées dans ce cas, en tenant compte de l'impact et de l'accumulation des grêlons. Dans un mode de réalisation, le moyen de contrôle de l'angle formé par chacune des surfaces substantiellement planes avec le plan vertical contenant l'axe de la rangée rectiligne de végétaux du dispositif de protection comprend une pluralité de plaques pivotantes, montées chacune en liaison pivot d'axe vertical avec au moins un des poteaux.

Cette disposition permet de faire varier la position du ou des points d'appui de l'élément de couverture sur les plaques pivotantes, et en conséquence de faire varier l'angle formé par chacune des surfaces substantiellement planes de cet élément de couverture avec la verticale. Dans un mode de réalisation, le dispositif de protection comprend en outre au moins un moteur permettant de déplacer chacune des plaques pivotantes autour de l'axe vertical de la liaison pivot qui la lie à au moins un des poteaux.

Cette disposition permet de faciliter le travail d'un opérateur pour adapter le dispositif de protection à une situation donnée, notamment à un élément naturel particulier.

Dans un mode de réalisation, l'élément de couverture du dispositif de protection est formé d'un matériau imperméable à l'eau dans ou sur lequel sont placées des tiges rigidifiantes de directions parallèles à l'axe de la rangée rectiligne de végétaux, à intervalles réguliers selon une direction orthogonale à la direction de la rangée rectiligne de végétaux.

De cette manière, l'eau peut ruisseler sur l'élément de couverture sans le traverser. De plus, cet élément de couverture est semi-rigide grâce aux tiges rigidifiantes, c'est-à-dire qu'il peut à la fois être enroulé et déroulé sans se déformer de manière irréversible, et une portion de l'élément de couverture qui est déroulée d'un côté de la végétation peut former une surface substantiellement plane, dont l'inclinaison par rapport à la verticale peut être éventuellement choisie.

Dans un mode de réalisation alternatif, l'élément de couverture est formé d'un matériau imperméable à l'eau dans ou sur lequel sont placées à intervalles réguliers selon une direction orthogonale à la direction de la rangée rectiligne de végétaux des tiges rigidifiantes s'étendant chacune suivant une direction. A u moins une direction suivant laquelle s'étend une tige rigidifiante est non parallèle à l'axe de la rangée rectiligne de végétaux lorsque l'élément de couverture est partiellement ou totalement déroulé

De cette manière, l'élément de couverture est aussi rendu semi-rigide, c'est-à-dire qu'il peut à la fois être enroulé et déroulé sans se déformer de manière irréversible, et une portion de l'élément de couverture qui est déroulée d'un côté de la végétation peut former une surface substantiellement plane, dont l'inclinaison par rapport à la verticale peut être éventuellement choisie.

Dans un mode de réalisation, le dispositif de protection comporte en outre un coffre de protection de l'élément de couverture.

Cette disposition permet d'augmenter la durée de vie de l'élément de couverture, naturellement exposé au soleil notamment.

Dans un mode de réalisation, les poteaux du dispositif de protection comprennent une partie inférieure destinée à être en contact avec le sol et une partie supérieure à laquelle sont liés le dispositif de contrôle de l'angle dièdre formé par chacune des surfaces planes de l'élément de couverture avec le plan vertical contenant l'axe de la rangée rectiligne de végétaux et le dispositif d'enroulement et de de déroulement de l'élément de couverture, les parties inférieure et supérieure étant l'une par rapport à l'autre en liaison pivot d'axe horizontal parallèle à la direction de la rangée rectiligne de végétaux.

Grâce à cette disposition, les composants liés à la partie supérieure de l'axe et la partie supérieure de l'axe peuvent être basculés vers le bas, notamment pour permettre une opération de rognage mécanisée de la végétation au niveau de sa partie supérieure, sans que le démontage du dispositif de protection ne soit nécessaire.

Selon un mode de réalisation, le dispositif de protection comprend en outre une canalisation par l'intermédiaire de laquelle un produit phytosanitaire peut être projeté sur ladite rangée rectiligne de végétaux.

Grâce à cette disposition, des produits phytosanitaires peuvent être pulvérisés ou projetés sur la rangée de végétaux, dans les cas où cela s'avère nécessaire, par exemple lorsque le dispositif de protection n'a pas permis d'éviter totalement que de l'eau ne s'accumule sur les végétaux ou si des nuisibles ont été repérés à proximité de la rangée de végétaux.

Selon un mode de réalisation, le dispositif de protection comprend en outre au moins un moteur permettant de déplacer ladite partie supérieure d'au moins un poteau en rotation autour de l'axe horizontal parallèle à la direction de la rangée rectiligne de végétaux de la liaison pivot qui le lie à la partie inférieure de ce poteau.

Cette disposition permet de faciliter le travail d'un opérateur pour adapter le dispositif de protection avant ou après une opération de rognage par exemple.

Selon un mode de réalisation, le dispositif de protection comporte au moins un capteur météorologique.

Grâce à cette disposition, un opérateur ou un processeur, distant ou non, peut être averti d'un évènement naturel météorologique particulier, nécessitant un changement de configuration (enroulement de l'élément de couverture, déroulement de l'élément de couverture, changement d'angle des surfaces planes de l'élément de couverture par rapport à la verticale,...) du dispositif de protection.

Selon un mode de réalisation, le dispositif de protection comprend des panneaux solaires permettant d'alimenter au moins un moteur en énergie électrique.

De cette manière, le dispositif de protection est partiellement autonome en énergie, d'autant plus qu'il est naturellement exposé au soleil.

L'invention concerne aussi un système de protection d'une rangée de végétaux rectiligne selon un axe comprenant :
- un dispositif de protection d'une rangée de végétaux comprenant au moins un moteur permettant de déplacer la partie supérieure d'au moins un poteau en rotation autour de l'axe horizontal parallèle à la direction de la rangée rectiligne de végétaux de la liaison pivot qui le lie à la partie inférieure de ce poteau et/ou au moins un moteur permettant de déplacer chacune des plaques pivotantes autour de l'axe vertical de la liaison pivot qui la lie à au moins un des poteaux,
- au moins un capteur météorologique,
- et un dispositif informatisé comprenant un processeur et recevant des informations de l'au moins un capteur météorologique et transmettant à au moins un moteur au moins une consigne calculée par le processeur à partir des informations reçues.

Grâce à cette disposition, la configuration du dispositif de protection (par enroulement de l'élément de couverture, déroulement de l'élément de couverture, changement d'angle des surfaces planes de l'élément de couverture par rapport à la verticale,...) peut être adaptée de manière automatisée aux variations de la situation météorologique au niveau de la rangée de végétaux.

Selon un mode de réalisation, dans le système de protection d'une rangée de végétaux rectiligne selon un axe suivant, le dispositif informatisé est distant. Le dispositif informatisé peut en outre recevoir d'un opérateur des consignes à transmettre à au moins un moteur.

De cette manière, la configuration du dispositif de protection peut être adaptée à distance. Elle peut notamment être adaptée à l'avance en fonction des prévisions météorologiques au niveau de la rangée de végétaux.

L'invention porte en outre sur un procédé de protection d'une rangée de végétaux rectiligne selon un axe comprenant les étapes :
- On fournit un système de protection d'une rangée de végétaux rectiligne selon un axe
- Au moins un des au moins un capteur météorologique transmet au moins une information au dispositif informatisé
- Le processeur du dispositif informatisé calcule au moins une consigne à partir de l'au moins une information reçue.
- Le dispositif informatisé transmet l'au moins une consigne à au moins un des au moins un moteur.
- Le moteur déplace au moins une partie du dispositif de protection en réponse à la consigne.

Cette disposition permet d'automatiser entièrement l'adaptation de la configuration du dispositif de protection de la rangée de végétaux, notamment à partir des données météorologiques mesurées par le ou les capteurs que contient ce dispositif.

L'invention concerne enfin un programme d'ordinateur comprenant des instructions de code pour l'exécution de l'étape de calcul d'une consigne à partir d'au moins une information reçue dans le procédé de protection d'une rangée de végétaux rectiligne selon un axe lorsque le programme est exécuté sur un ordinateur.

### BRÈVE DESCRIPTION DES DESSINS

Des modes de réalisation de l'invention seront décrits ci-dessous par référence aux dessins, décrits brièvement ci-dessous :
Fig. 1 représente une vue du dispositif de protection plaques pivotantes ouvertes en coupe suivant un plan vertical.
Fig. 2 représente une vue de dessus du dispositif de protection plaques pivotantes fermées.
Fig. 3 représente une vue du dispositif de protection plaques pivotantes fermées en coupe suivant un plan vertical.
Fig. 4a représente un premier mode de réalisation d'un élément de couverture 13 semi-rigide vu de côté.
Fig. 4b représente le premier mode de réalisation d'un élément de couverture 13 semi-rigide vu de face.
Fig. 5 représente un second mode de réalisation d'un élément de couverture 13 semi-rigide.
Fig. 6 représente une vue agrandie d'une portion d'un élément de couverture 13 semi-rigide dans un troisième mode de réalisation.

Sur les dessins, des références identiques désignent des objets identiques ou similaires.

### DESCRIPTION DÉTAILLÉE

L'invention concerne un dispositif de protection de cultures disposées en rangs contre les éléments naturels tels que la pluie, la grêle, le gel, et de manière plus générale l'humidité ou le froid.

Les cultures à protéger comportent une pluralité de végétaux plantés suivant des rangées et de hauteurs similaires. Les végétaux 16 comportent chacun une portion s'étendant substantiellement verticalement, telle qu'un tronc. Ils peuvent suivant les saisons s'étendre latéralement vers l'extérieur de la rangée, notamment lorsque les rameaux, branches et feuilles se développent.

A titre d'exemple, les végétaux 16 sont des vignes.

Le dispositif de protection 1 est destiné à protéger une rangée ou une partie d'une rangée de végétaux 16. Il comporte une pluralité de poteaux 14 s'étendant substantiellement verticalement.

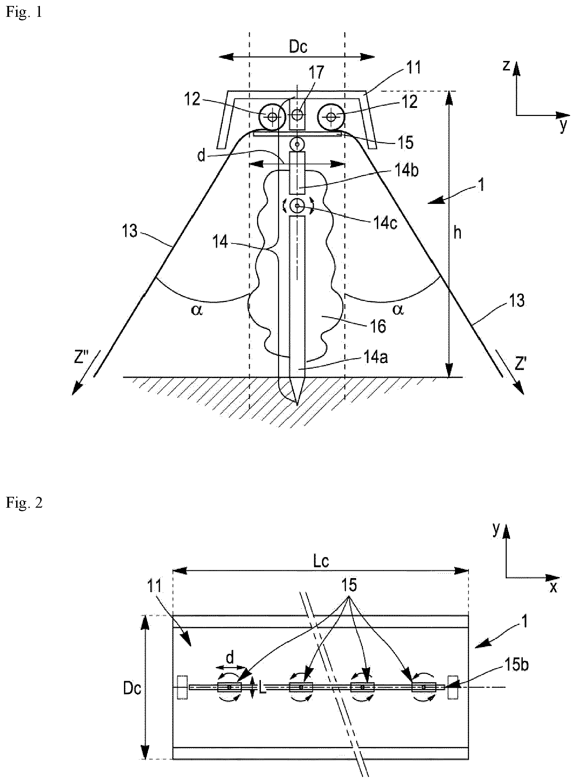

Un exemple de réalisation du dispositif de protection 1, vu en coupe suivant un plan vertical contenant un poteau 14, est présenté sur la Fig.1. Sur cette figure et sur les figures suivantes, l'axe (Oz) est l'axe vertical, l'axe (Ox) est un axe horizontal et parallèle à l'axe de la rangée et l'axe (Oy) est un axe horizontal orthogonal aux axes (Ox) et (Oz).

Dans un mode de réalisation, les poteaux 14 sont disposés à intervalles réguliers suivant la direction de la rangée, parallèle à l'axe (Ox).

Les poteaux 14 peuvent, dans une variante de réalisation, être chacun d'un seul tenant.

Dans ce cas, il peut être envisagé soit d'utiliser les piquets déjà présents dans les vignes pour le palissage de celles-ci, soit d'utiliser des poteaux spécifiques au dispositif de protection 1.

Dans une variante, les poteaux 14 comportent chacun une partie inférieure 14a, dont l'extrémité inférieure est insérée dans le sol, une partie supérieure 14b et une articulation 14c assurant une liaison pivot d'axe horizontal entre les parties inférieure 14a et supérieure 14b du poteau 14. Dans ce cas, la partie 14a peut éventuellement être formée par les piquets de palissage.

Les poteaux 14 peuvent être en métal, par exemple en acier galvanisé ou inoxydable. D'autres matériaux, tels que le PVC ou le bois peuvent être envisagés pour réaliser tout ou partie d'un poteau 14.

Du côté de l'extrémité supérieure d'un poteau 14 et sous cette extrémité, une plaque pivotante 15 est liée au poteau 14 par une liaison pivot d'axe vertical confondu avec l'axe vertical du poteau 14.

Une plaque pivotante 15 est par exemple de forme parallélépipédique. Elle présente une largeur L de dimension inférieure à sa longueur d.

En position fermée, une plaque pivotante 15 est alignée suivant la direction de sa longueur d avec l'axe de la rangée de végétaux 16 équipée du dispositif de protection 1. Cette position peut être visualisée sur la Fig. 2.

En position d'ouverture maximale, représentées sur la Fig. 1, une plaque pivotante 15 est alignée suivant la direction de sa longueur d avec une direction perpendiculaire à l'axe de la rangée de végétaux 16, donc parallèle à l'axe (Oy).

Une plaque pivotante 15 peut, grâce au dispositif de liaison pivot qui la lie avec le poteau 14, être placée dans une position quelconque entre la position fermée et la position d'ouverture maximale. Optionnellement, la plaque pivotante 15 peut tourner d'un angle quelconque dans le sens horaire ou le sens trigonométrique à partir de sa position fermée.

Un système de blocage de la position d'une plaque pivotante 15 en rotation autour de l'axe de la liaison pivot est prévu.

Par exemple, le dispositif de protection 1 peut être automatisé : les plaques pivotantes 15 peuvent être motorisées et leur position en rotation bloquée ou débloquée de manière contrôlable, par exemple au moyen d'un système de cliquets.

Dans un mode de réalisation particulier, les plaques pivotantes 15 sont reliées entre elles par une tringlerie de sorte que leurs rotations sont synchrones.

Dans un mode de réalisation particulier, les plaques pivotantes 15 sont reliées par une ou plusieurs barres de soutien qui s'étendent suivant une direction parallèle à l'axe de la rangée de végétaux.

Les barres de soutien et la tringlerie peuvent présenter des éléments communs.

Deux dispositifs d'enroulement et de déroulement 12 sont placés latéralement de part et d'autre du poteau 14 au-dessus de la plaque pivotante 15.

Les directions (horizontales en position d'attente de déroulement) des axes des dispositifs d'enroulement 12 sont fixes par rapport à la partie supérieure 14b du poteau.

Les dispositifs d'enroulement et de déroulement 12 reçoivent chacun un élément de couverture 13, qui peut être enroulé ou déroulé partiellement ou totalement par rotation autour de la direction horizontale de l'axe du dispositif d'enroulement et de déroulement 12.

La plaque pivotante 15 n'est pas gênée dans son pivotement par la présence des éléments de couverture 13 complètement enroulés sur les dispositifs d'enroulement et de déroulement 12. En d'autres termes, la plaque pivotante 15 n'est pas en contact avec les éléments de couverture 13 lorsque ces derniers sont totalement enroulés.

Chacun des dispositifs d'enroulement et de déroulement 12 peut être manœuvré manuellement ou encore motorisé.

Quelle que soit la position d'une plaque pivotante 15, un élément de couverture 13, lorsqu'il est partiellement ou totalement déroulé, prend appui dans sa partie haute soit sur une extrémité d'une plaque pivotante 15 soit, dans le cas les plaques pivotantes 15 sont reliées entre elles par des tringles de direction parallèle à la direction (Ox) de la rangée de végétaux au niveau de leurs extrémités, sur l'une des tringles. Ce deuxième mode de réalisation permet d'éviter une usure localisée de l'élément de couverture au niveau des extrémités des plaques pivotantes 15 en répartissant les forces de contact sur l'ensemble de la tringle.

Les plaques pivotantes 15 sont de préférence bloquées dans la même position avant déroulement d'un ou des deux éléments de couverture 13, de sorte que ce ou ces éléments de couverture 13 prennent appui sur l'ensemble des plaques pivotantes 15 une fois déroulés.

Optionnellement, un coffre de protection 11est lié au poteau 14 au-dessus des dispositifs d'enroulement et de déroulement 12, de manière à protéger de la pluie les éléments de couverture 13 lorsque ces derniers sont enroulés.

Le coffre de protection11 est à titre d'exemple en matériau plastique, tel que du PVC.

Un coffre de protection 11 s'étend latéralement, suivant une direction parallèle à la direction (Oy) de manière à recouvrir les deux éléments de couverture 13 enroulés placés de part et d'autre d'un ou plusieurs poteaux 14.

La largeur De du coffre de protection 11 suivant la direction parallèle à la direction (Oy) est, dans le cas des vignes, la plus faible possible, de manière à ce que le coffre de protection 11 limite aussi peu que possible l'exposition de la vigne au soleil, de manière à conserver un taux de sucre satisfaisant.

Le coffre de protection 11 s'étend suivant la direction de la rangée de végétaux 16, parallèle à la direction (Ox), sur une longueur Le supérieure ou égale à la distance entre deux poteaux 14 successifs. La longueur Le sera choisie notamment pour faciliter le transport du coffre de protection 11 et son montage.

Suivant la longueur de la rangée de végétaux 16 à protéger, un seul coffre de protection 11 sera installé ou plusieurs coffres de protection 11 seront juxtaposés. Dans ce dernier cas, un joint étanche à l'eau pourra être placé entre deux coffres de protection 11 successifs.

L'élément de couverture 13 est de préférence fait d'un matériau imperméable, pour permettre une protection contre la pluie. Il peut s'agir de polyester ou d'un matériau plastique par exemple.

Le matériau peut dans un mode de réalisation être résistant aux UV et transparent à la lumière visible, pour limiter la dégradation du matériau du fait de son exposition au soleil, tout en permettant une bonne croissance des végétaux 16 même lorsque l'élément de couverture 13 est déployé.

De préférence, l'élément de couverture 13 est une bâche semi-rigide.

L'élément de couverture 13 est dit semi-rigide dans la mesure où il peut s'enrouler et se dérouler sans se déformer de manière irréversible et où lorsqu'il est déroulé partiellement ou totalement, il forme, entre la hauteur de ses points d'appui sur les plaques pivotantes 15 et la hauteur de son bord inférieur, une surface substantiellement plane dans des conditions normales d'utilisation.

Suivant le matériau semi-rigide utilisé et les dimensions de l'élément de couverture, ainsi que la longueur de l'élément de couverture effectivement déroulé, il se forme une zone de transition courbe entre la portion de l'élément de couverture 13 enroulée sur le dispositif d'enroulement et de déroulement 12 et la portion plane de l'élément de couverture 13.

L'ampleur de cette zone de transition est définie par la position des point d'appui sur les plaques pivotantes 15 et elle détermine l'angle que va former la surface substantiellement plane de l'élément de couverture 13 avec un plan verticale.

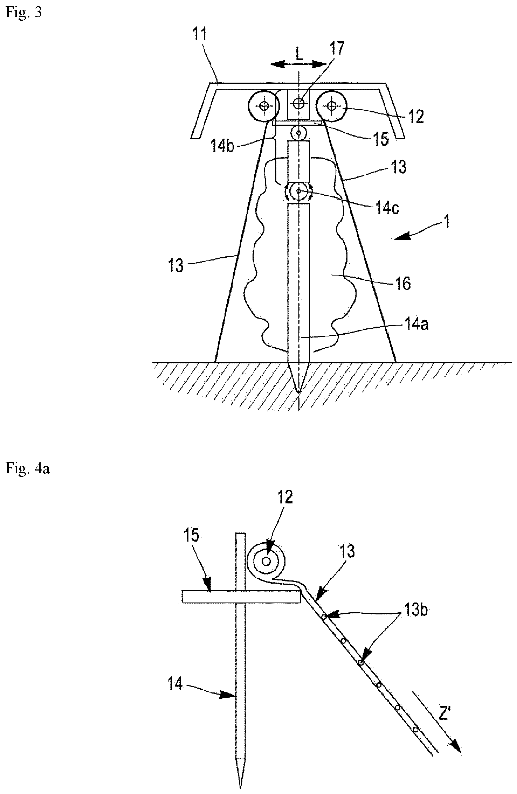

Pour simplifier les schémas, cette zone de transition n'est pas nécessairement représentée de manière réaliste, mais l'inclinaison de la surface substantiellement plane de l'élément de couverture 13 en tient compte dans les figures 1 et 3.

Le caractère semi-rigide peut dans un premier mode de réalisation être assuré par des tiges rigidifiantes 13b, telles que des tiges de fibres de verre, de PVC, métalliques ou en fibre de carbone d'axe parallèle à la direction (Ox) et disposées à intervalles réguliers suivant la seconde dimension de l'élément de couverture 13, comme représenté sur la Fig. 4a.

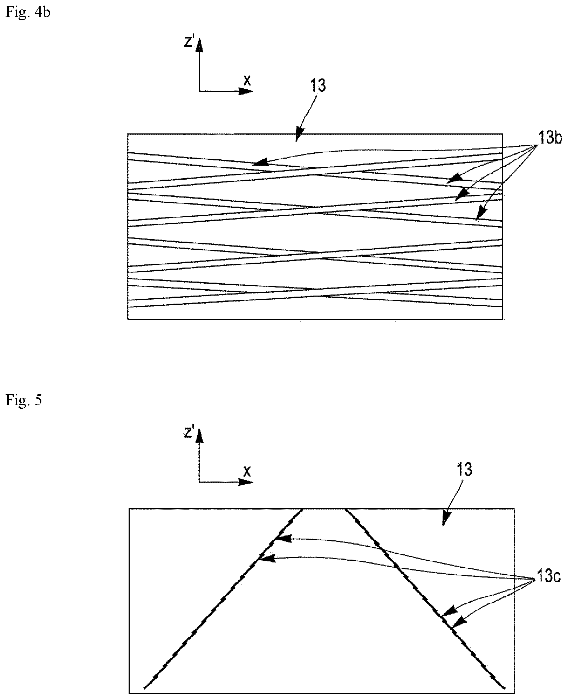

De préférence, au moins deux séries de tiges rigidifiantes 13b régulièrement espacées sont prévues. Les tiges d'une série donnée sont parallèles entre elles et de direction non parallèle aux bords de l'élément de couverture 13. Les directions définies par les tiges des deux séries sont différentes de sorte qu'au moins une tige d'une série s'entrecroise avec au moins une tige d'une autre série, comme représenté sur la Fig. 4b.

Cette disposition permet de conférer une rigidité suffisante à l'élément de couverture 13 pour obtenir la formation d'une surface substantiellement plane lorsque l'élément de couverture 13 est partiellement ou totalement déroulé.

L'espacement entre deux tiges rigidifiantes successives, les directions des tiges rigidifiantes 13b et le matériau constituant ces tiges sont choisis pour permettre aussi l'enroulement de l'élément de couverture autour du dispositif d'enroulement et de déroulement 12, de sorte que l'élément de couverture 13 présente bien un caractère semi-rigide.

Dans un deuxième mode de réalisation, le caractère semi-rigide est assurée par un ensemble de plaquettes rigidifiantes 13c, par exemple métalliques ou en plastique.

Dans un mode de réalisation particulier représenté sur la Fig. 5, lorsqu'un élément de couverture 13 est déroulé d'un côté de la rangée, les plaquettes rigidifiantes 13c présentes dans la portion déroulée de l'élément de couverture sont tuilées les unes sur les autres et forment une ou plusieurs lignes de direction non parallèle à la direction (Ox), de sorte que l'élément de couverture 13 forme, dans sa portion en-dessous des plaques pivotantes 15, une surface plane, ou substantiellement plane, parallèle à un plan (xOZ') ou à un plan (xOZ") suivant le côté concerné.

La disposition des plaquettes rigidifiantes 13c permet ce tuilage lors du déroulement et donc confère un caractère rigide à l'élément de couverture 13 lorsqu'il est déroulé mais les plaquettes rigidifiantes n'étant pas liées les unes aux autres, elles n'empêchent pas l'enroulement ultérieur de l'élément de couverture 13. Cet élément de couverture 13 présente donc bien un caractère « semi-rigide » au sens de l'invention.

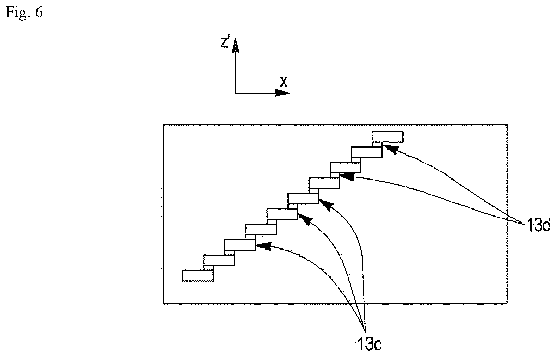

Dans un autre mode de réalisation particulier représenté de manière agrandie sur la Fig. 6, les plaquettes rigidifiantes 13c sont articulées les unes par rapport aux autres au moyen par exemple de charnières ou de paumelles 13d, chaque plaquette rigidifiante 13c (mis à part les plaquettes rigidifiantes 13c aux deux extrémités d'un ensemble de plaquettes 13c articulées entre elles) étant en conséquence liée à la plaquette rigidifiante 13c suivante et/ou précédente par une liaison pivot d'axe (Ox).

Deux plaquettes rigidifiantes 13c s'écartent l'une de l'autre lors du déroulement de l'élément de couverture, jusqu'à se positionner dans le même plan. Les deux plaquettes rigidifiantes 13c se rapprochent l'une de l'autre lors de l'enroulement sur le dispositif d'enroulement de sorte qu'elles forment un angle dièdre inférieur à 180°, voire inférieure à 90°.

Une ou plusieurs lignes de plaquettes rigidifiantes 13c sont formées en fonction de la rigidité finale souhaitée et des dimensions de l'élément de couverture 13.

De préférence, les plaquettes rigidifiantes 13c sont réparties suivant la direction (Ox) de la rangée de végétaux et suivant la deuxième dimension (OZ') de l'élément de couverture 13 une fois déroulé de manière à ce que la surépaisseur associée à la présence de ces plaquettes n'entrave pas l'enroulement de l'élément de couverture 13 sur le dispositif d'enroulement 12. On comprend que, comme l'élément de couverture n'est pas absolument rigide mais semi-rigide pour pouvoir être enroulé, quelque soit le mode de réalisation, les surfaces formées entre l'extrémité inférieure de l'élément de couverture et ses points d'appui sur les plaques pivotantes 15 sont substantiellement planes. Le caractère plan est donc compris dans les limites du raisonnable et ne doit pas être interprété au sens strict.

Ces surfaces formées entre l'extrémité inférieure de l'élément de couverture et ses points d'appui sur les plaques pivotantes 15 conservent une certaine souplesse qui leur permet de se déformer de manière limitée par rapport à ce plan idéal, notamment en présence de vent ou sous l'impact de la pluie. Cette déformation modérée doit être comprise comme dans le domaine des stores bannes par exemple, pour lesquels il est possible, grâce à des éléments rigidifiants, de projeter la toile du store pour qu'elle se rapproche autant que possible d'un plan d'inclinaison choisi par rapport à la verticale.

Dans d'autres modes de réalisation de l'invention, des moyens analogues au domaine des stores bannes, ou tout autre moyen équivalent à ceux décrit précédemment, peuvent éventuellement être mis en œuvre pour permettre de disposer chacune des portions de l'élément de couverture effectivement déroulées de part et d'autre de la végétation de manière aussi proches que possible d'un plan d'inclinaison choisi par rapport à la verticale. Grâce à son caractère semi-rigide, l'angle alpha (a) que forme la surface d'un élément de couverture 13 avec le plan vertical (xOz), c'est-à-dire l'angle (OzZ') ou l'angle (OzZ"), est déterminé, comme indiqué plus haut, par la position des plaques pivotantes 15 sur les extrémités desquelles l'élément de couverture 13 prend appui du côté concerné.

L'angle alpha varie donc entre deux extrêmes lorsque la position des plaques pivotantes 15 varie, extrêmes déterminés par la longueur d et la largeur L des plaques pivotantes 15, ces deux extrêmes étant représentés sur les figures Fig. 1 (alpha maximal) et Fig. 3 (alpha minimal).

Par exemple, en cas de gel, les plaques pivotantes 15 pourront être maintenues en position fermée lors du déroulement des éléments de couverture 13. De cette manière, les éléments de couverture 13 sont placés au plus proche de la végétation (notamment des bourgeons) de manière à maintenir sa température la plus élevée possible.

Optionnellement, une résistance chauffante peut être disposée sur la face interne de chacun des éléments de couverture 13 (c'est-à-dire du côté de la végétation) ou entre les deux faces de chacun des éléments de couverture 13, par exemple sous forme d'un serpentin. Cette résistance chauffante peut être activée si la température extérieure devient inférieure à une température de consigne.

A cet effet, le dispositif de protection 1 peut comporter un capteur de température dont les mesures sont transmises à un dispositif de commande du circuit électrique alimentant la résistance chauffante et/ou à un dispositif de commande de moteurs permettant le déroulement ou l'enroulement des éléments de couverture 13 et/ou la rotation des plaques pivotantes 15.

De cette manière, lorsque la température extérieure devient inférieure à une première température de consigne T1, les éléments de couverture 13 sont automatiquement déployés, les plaques pivotantes 15 étant placées en position fermées. Lorsque la température extérieure passe en dessous d'une seconde température de consigne T2, les résistances chauffantes sont activées automatiquement.

Dans un mode de réalisation particulier, les températures T1 et T2 sont égales.

En cas de pluie, les plaques pivotantes 15 peuvent être placées en position totalement ouverte. La longueur d des plaques pivotantes 15 sera par exemple choisie pour permettre d'obtenir un angle alpha de l'ordre de 60°, de sorte qu'en cas de pluie, l'eau ruisselle le long des éléments de couverture 13 directement au milieu des sillons, entre deux rangées, le plus loin possible des pieds et des feuilles où elle pourrait, en s'accumulant, provoquer des contaminations primaires et/ou secondaires de certaines maladies cryptogamiques.

La longueur d des plaques pivotantes 15 (et en conséquence l'angle alpha maximal), ainsi que la hauteur h de la partie aérienne des poteaux 14 pourront notamment être adaptés au type de culture, et en particulier au type de vignoble, qui est équipé du dispositif de protection 1, la disposition et le palissage des rangées n'étant pas les mêmes dans le Bordelais et le Beaujolais ou encore le Val de Loire. Les valeurs numériques données dans ce document ne sont donc que des exemples particuliers, permettant de faire comprendre l'importance du contrôle de l'angle alpha.

En cas de grêle, les plaques pivotantes 15 seront placées dans une position intermédiaire entre la position ouverte et la position fermée. Cette position sera par exemple choisie pour permettre d'obtenir un angle alpha de l'ordre de 45°, permettant à la grêle de s'écouler vers le sillon comme précédemment mais en tenant compte du fait que l'élément de couverture 13 ploie sous l'impact des grêlons, accroissant l'angle alpha au moins sur la partie basse de l'élément de couverture 13.

Dans un mode de réalisation particulier, le dispositif de protection 1 comporte un capteur météorologique, tel qu'un détecteur de pluie et/ou de grêle et/ou de vent dont les mesures sont transmises à un dispositif de commande de moteurs permettant le déroulement ou l'enroulement des éléments de couverture 13 et/ou la rotation des plaques pivotantes 15. Ce détecteur de pluie et/ou de grêle et/ou de vent peut notamment être placé au-dessus du coffre de protection 11.

Par exemple, le détecteur de grêle ou de pluie comporte un accéléromètre ou un disdromètre.

Les informations du capteur peuvent être transmises à un opérateur ou à un dispositif informatisé, distant ou non. Le processeur du dispositif informatisé distant peut calculer à partir de ces informations une consigne, ensuite transmise à l'opérateur ou directement aux moteurs équipant le dispositif de protection 1. Dans ce dernier cas, cela permet le déroulement automatique des éléments de couverture 13 lorsque le début d'une averse de pluie et/ou de grêle est détecté, et l'enroulement des éléments de couverture 13 lorsque cette averse est terminée. Cela permet aussi de modifier l'angle alpha par exemple si la pluie est remplacée par de la grêle, ou si la direction ou l'intensité du vent évolue.

Optionnellement, une canalisation 17 est placée dans la partie supérieure des poteaux 14, sous le coffre de protection 11 et sous ou au-dessus des plaques 15, de sorte à ce qu'elle traverse l'ensemble du dispositif 1 suivant la direction (Ox) de la rangée de végétaux 16. Cette canalisation 17 est par exemple percée de trous à intervalles réguliers. Elle permet, lorsqu'elle est connectée par exemple à une bonbonne de liquide, de gaz ou d'aérosol, et que l'élément de couverture 13 est déroulé totalement, de diffuser ce liquide, ce gaz ou cet aérosol vers les végétaux 16 sans dispersion dans l'atmosphère.

Ce mode de réalisation permet de prévenir le développement de maladies associées à l'humidité qui peut s'accumuler pendant le temps nécessaire au déroulement des éléments de couverture 13 manuel, ou automatique soit après détection par les capteurs d'un évènement déclencheur soit du fait d'une instruction de déroulement donné à distance.

Les capteurs sont notamment des capteurs météorologiques.

Ce mode de réalisation permet aussi de limiter l'usage des produits phytosanitaires de manière générale, puisqu'il permet leur projection ou leur diffusion dans un volume contrôlé à proximité des végétaux 16 sans dispersion dans l'atmosphère et sans perte de matière du fait du vent par exemple.

Optionnellement, chacun des poteaux 14 comporte une partie inférieure 14a, dont l'extrémité inférieure est insérée dans le sol, une partie supérieure 14b et une articulation 14c assurant une liaison pivot d'axe horizontal entre les parties inférieure 14a et supérieure 14b du poteau 14.

La liaison pivot 14c permet le basculement de l'ensemble de la partie haute du dispositif, à savoir la partie supérieure 14b de chaque poteau, les dispositifs d'enroulement et de déroulement 12, les éléments de couverture 13 enroulés et le cas échéant le coffre de protection 11, d'une position haute à une position basse, par rotation autour de l'axe horizontal de la liaison pivot d'un angle obtus.

Ce mouvement de rotation peut dans un mode de réalisation particulier, être motorisé, et éventuellement piloté à distance.

Dans un autre mode de réalisation, la partie supérieure 14b de chaque poteau peut être manœuvrée manuellement et bloquée dans une position choisie par rapport à la partie inférieure 14a du poteau, par exemple au moyen d'une goupille.

De préférence, un système de freinage permettra un basculement doux entre la position haute et la position basse pour ne pas abîmer la végétation.

Cette disposition permet la taille des végétaux en partie haute, nécessaire pour un bon développement de celle-ci. Notamment, dans le cas de la viticulture, il sera possible de procéder à des opérations de rognage plusieurs fois par saison sans démonter le dispositif de protection 1. Dans un mode de réalisation particulier, le dispositif de protection 1 est amovible, et n'est installé que pendant les périodes à risque et/ou dans des zones à risques identifiées.

Dans un mode de réalisation particulier, l'ensemble des moteurs et des capteurs échangent des informations avec un dispositif de communication distant comprenant un processeur.

De cette manière, le déroulement et l'enroulement des éléments de couverture 13 peut être piloté à distance de manière semi-automatique : des commandes de rotation des plaques pivotantes 15 et d'enroulement ou de déroulement des éléments de couverture 13 peuvent être transmises préventivement par un opérateur, par exemple en réaction à une information météorologique, ou transmises automatiquement en réaction aux grandeurs mesurées par les capteurs et/ou à des informations météorologiques, telle qu'une prévision météorologique. Dans ce dernier cas, l'invention porte aussi sur un programme d'ordinateur comprenant des instructions de code pour l'exécution de l'étape de calcul d'une consigne à partir d'au moins une information reçue d'un capteur, et/ou d'au moins une information météorologique telle qu'une prévision météorologique à proximité de la rangée de végétaux lorsque le programme est exécuté sur un ordinateur.

Cette disposition permet d'adapter la configuration du dispositif de protection de manière totalement automatisée, soit en fonction d'un évènement météorologique en cours, soit en fonction d'un évènement météorologique prévu.

De la même façon, une commande de basculement de la partie haute du dispositif de protection du haut vers le bas peut être transmise en prévision d'une opération de taille et du bas vers le haut à l'issue de cette opération.

Dans un mode de réalisation particulier, le dispositif de protection 1 est alimenté en énergie électrique par le réseau de distribution. En variante, des panneaux solaires sont placés au-dessus du coffre de protection 11, et éventuellement connectés à une batterie de stockage, de manière à rendre le dispositif de protection 1 partiellement ou totalement autonome en énergie.

Dans un mode de réalisation particulier, le dispositif de protection 1 est modulaire, de manière à pouvoir être adapté sur des rangées de végétaux 16 de longueur variable.

### LISTE DES SIGNES DE RÉFÉRENCE

1 : dispositif de protection
11 : coffre de protection
12 : dispositif d'enroulement et de déroulement de la bâche 13
13 : élément de couverture
13b : tige rigidifiante
13c : plaquette rigidifiante
13d : plaquette intercalaire
14a : partie inférieure du poteau
14b : partie supérieure du poteau
14c : dispositif assurant une liaison pivot entre 14a et 14b
15 : plaque pivotante
15b : barre de soutien
16 : végétal à protéger
17 : canalisation

## Revendications

1. Dispositif de protection (1) d'une rangée de végétaux (16) rectiligne selon un axe, le dispositif de protection (1) comprenant une pluralité de poteaux (14) alignés suivant ledit axe de la rangée de végétaux (16), un élément de couverture (13) et un dispositif (12) d'enroulement et de déroulement dudit élément de couverture (13), **caractérisé en ce que** :
• l'élément de couverture (13), lorsqu'il est au moins partiellement déroulé, forme de part et d'autre de la rangée rectiligne de végétaux (16) deux surfaces planes,
• et **en ce que** le dispositif de protection (1) comprend un dispositif de contrôle de l'angle dièdre formé par chacune desdites surfaces planes avec un plan vertical contenant l'axe de la rangée de végétaux (16).

2. Dispositif de protection (1) suivant la revendication 1 **caractérisé en ce que** le dispositif de contrôle de l'angle dièdre formé par chacune des surfaces planes avec le plan vertical contenant l'axe de la rangée rectiligne de végétaux (16) comprend une pluralité de plaques pivotantes (15), montées chacune en liaison pivot d'axe vertical avec au moins un des poteaux (14).

3. Dispositif de protection (1) suivant la revendication 2 **caractérisé en ce qu'**il comprend en outre au moins un moteur permettant de déplacer chacune des plaques pivotantes (15) autour de l'axe vertical de la liaison pivot qui la lie à au moins un des poteaux (14).

4. Dispositif de protection (1) suivant l'une quelconque des revendications 1 à 3 **caractérisé en ce que** l'élément de couverture (13) est formé d'un matériau imperméable à l'eau dans ou sur lequel sont placées à intervalles réguliers selon une direction orthogonale à la direction de la rangée rectiligne de végétaux (16) des tiges rigidifiantes (13b) s'étendant chacune suivant une direction, au moins une direction suivant laquelle s'étend une tige rigidifiante (13b) est non parallèle à l'axe de la rangée rectiligne de végétaux (16) lorsque l'élément de couverture (13) est partiellement ou totalement déroulé.

5. Dispositif de protection (1) suivant l'une quelconque des revendications 1 à 3 **caractérisé en ce que** l'élément de couverture (13) est formé d'un matériau imperméable à l'eau dans ou sur lequel sont placées une pluralité de plaques rigidifiantes (13c) de sorte qu'au moins deux plaques rigidifiantes (13c) sont tuilées suivant au moins une direction non parallèle à la direction de la rangée rectiligne de végétaux (16) lorsque l'élément de couverture (13) est partiellement ou totalement déroulé.

6. Dispositif de protection (1) suivant l'une quelconque des revendications 1 à 5 **caractérisé en ce qu'**il comporte en outre un coffre de protection (11) de l'élément de couverture (13) lorsqu'il est au moins partiellement enroulé.

7. Dispositif de protection (1) suivant l'une quelconque des revendications 1 à 6 **caractérisé en ce que** les poteaux (14) comprennent une partie inférieure (14a) destinée à être en contact avec le sol et une partie supérieure (14b) à laquelle sont liés le moyen de contrôle de l'angle dièdre formé par chacune des surfaces planes de l'élément de couverture (13) avec le plan vertical contenant l'axe de la rangée rectiligne de végétaux (16) et le dispositif (12) d'enroulement et de déroulement, lesdites parties inférieure (14a) et supérieure (14b) étant l'une par rapport à l'autre en liaison pivot d'axe horizontal parallèle à la direction de la rangée rectiligne de végétaux (16).

8. Dispositif de protection (1) suivant l'une quelconque des revendications 1 à 7 **caractérisé en ce qu'**il comprend en outre une canalisation (17) par l'intermédiaire de laquelle un produit phytosanitaire peut être projeté sur la rangée rectiligne de végétaux (16).

9. Dispositif de protection (1) suivant l'une quelconque des revendications 7 ou 8 **caractérisé en ce qu'**il comporte en outre au moins un moteur permettant de déplacer ladite partie supérieure (14b) d'au moins un poteau (14) en rotation autour de l'axe horizontal parallèle à la direction de la rangée rectiligne de végétaux (16) de la liaison pivot qui le lie à ladite partie inférieure (14a) du poteau (14).

10. Dispositif de protection (1) suivant l'une quelconque des revendications 1 à 9 **caractérisé en ce qu'**il comporte au moins un capteur météorologique.

11. Dispositif de protection (1) suivant l'une quelconque des revendications 3 et 9 **caractérisé en ce qu'**il comprend des panneaux solaires permettant d'alimenter ledit au moins un moteur en énergie électrique.

12. Système de protection d'une rangée de végétaux (16) rectiligne selon un axe comprenant
1. un dispositif de protection (1) suivant les revendications 3 et/ou 9,
2. au moins un capteur météorologique,
3. et un dispositif informatisé comprenant un processeur et recevant des informations de l'au moins un capteur météorologique et transmettant à au moins un des au moins un moteur au moins une consigne calculée par le processeur à partir desdites informations reçues.

13. Système de protection d'une rangée de végétaux (16) rectiligne selon un axe suivant la revendication 12 **caractérisé en ce que** le dispositif informatisé est distant et **en ce que** le dispositif informatisé peut en outre recevoir d'un opérateur des consignes à transmettre à au moins un des au moins un moteur.

14. Procédé de protection d'une rangée de végétaux (16) rectiligne selon un axe comprenant les étapes :
1. On fournit un système de protection d'une rangée de végétaux (16) rectiligne selon un axe suivant la revendication 12 ou la revendication 13 ;
2. Au moins un des au moins un capteur météorologique transmet au moins une information au dispositif informatisé ;
3. Le processeur du dispositif informatisé calcule au moins une consigne à partir de l'au moins une information reçue ;
4. Le dispositif informatisé transmet l'au moins une consigne à au moins un des au moins un moteur ;
5. Ledit moteur déplace au moins une partie du dispositif de protection (1) en réponse à ladite consigne.

15. Programme d'ordinateur comprenant des instructions de code pour l'exécution de l'étape 3 du procédé suivant la revendication 14 lorsque ledit programme est exécuté sur un ordinateur.
